# EUROPÄISCHE PATENTSCHRIFT

(11) **EP 1 223 204 B1**
(45) Veröffentlichungstag und Bekanntmachung des Hinweises auf die Patenterteilung: **29.03.2006**
(21) Anmeldenummer: 01129661.3
(22) Anmeldetag: 13.12.2001
(51) Int. Cl.: C09J 7/02, C09J 109/10

(54) **Klebebänder**
Adhesive tapes
Rubans adhésifs

(30) Priorität: 13.01.2001 DE 10101333
(43) Veröffentlichungstag der Anmeldung: 17.07.2002
(73) Patentinhaber: tesa AG, 20253 Hamburg (DE)
(72) Erfinder: Spies, Manfred, Dr., 24576 Bad Bramstedt (DE); Kozaczka, Zygmunt, 22299 Hamburg (DE)

(56) Entgegenhaltungen:
- US-A- 3 743 616
- US-A- 3 937 683
- DATABASE WPI Section Ch, Week 199115 Derwent Publications Ltd., London, GB; Class A18, AN 1991-104953 XP002161591 & JP 03 045676 A (MITSUI TOATSU CHEM INC), 27. Februar 1991 (1991-02-27)

## Beschreibung

Die Erfindung betrifft die Entwicklung von Haftklebebändern mit kohäsiven Massesystemen auf Basis von Butadien/Acrylat Latices mit einem hohen Butadiengehalt und Naturkautschuklatex.

Die klassischen Klebemassesyteme für Haftklebebänder basieren im wesentlichen auf Naturkautschuk, Styrol-Blockcopolymeren und Polyacrylaten. Für Anwendungen, bei denen spezielle Anforderungen an ein reversibles Verhalten gestellt werden, kommen auch Ethylvinylacetate oder Polyisobutylene in Betracht.

Styrol/Butadien Latices werden im Bereich der "Pressure Sensitive Adhesives" seit vielen Jahren zur Imprägnierung und Stabilisierung von Trägermaterialien eingesetzt. Hierbei stehen Papiere Gewebe und Vliese im Vordergrund. Die Imprägnierung oder Beschichtung darf aufgrund der Anwendung keinesfalls klebrig sein. Die für diese Anwendung eingesetzten Styrol/Butadien Copolymere müssen daher einen relativ hohen Anteil an hartmachenden Monomeren enthalten, aber andererseits genügend weichmachendes Monomer, so daß das Copolymer insgesamt noch elastisch ist. Styrol/Butadien Latices mit einem Butadiengehalt von etwa 25-55% erfüllen diese Anforderung sehr gut. Filme dieser Copolymeren sind in Abhängigkeit des Butadiengehaltes mäßig elastisch bis elastisch, und nicht klebend. Derartige Copolymere sind schon seit vielen Jahren auf dem Rohstoffmarkt verfügbar (Butofan®-Typen der BASF, diverse Typen von Dow und Synthomer). Bedingt durch ihre Herstellung enthalten derartige Latices bzw. Dispersionen Emulgator-Systeme, um eine Kompatibilität zwischen der organischen und der wässrigen Phase herzustellen.

Styrol/Butadien Copolymere wurden in der Vergangenheit auch als Basispolymere für Etikettenmassen eingesetzt. Im Bereich der Etiketten kommt der Kohäsion häufig sekundäre Bedeutung zu, so dass schwach klebende Systeme nach Compoundierung mit üblichen Tackyfiem (Harzdispersionen) in vielen Fällen ausreichende Eigenschaften zeigen.

Styrol Butadien Copolymere wurden auch in Kombination mit Naturkautschuklatices beschrieben. Eine Übersicht hierzu findet sich in: Donatas Satas, Handbook of Pressure Sensitive Adhesive Technology, 3. Edition, *Natural RubberAdhesives by G. L. Butler (S.* 276-283).

Osari beschreibt in EP-A-0 688 843 die Verwendung wässriger Emulsionen auf Basis von Naturkautschuklatex zur Herstellung von Haftklebebändern. Der Zusatz von Styrol/Butadien Dispersionen mit einem üblichen Butadiengehalt (im Bereich von ca. 25-55%) dient hierbei vorwiegend der Stabilisierung des scherinstabilen Naturkautschuklatex, und der Viskositätseinstellung.

Als Gerüstpolymere für kohäsive Haftklebemassen sind übliche Styrol/Butadien Copolymere mit einem Butadiengehalt zwischen 25 und 55% nur mangelhaft geeignet, da diese immer mit z.TI. erheblichen Mengen an Tackyfierharzen klebrig gemacht werden müssen, was mit einem weitreichenden Kohäsionsverlust verbunden ist. Dieses schließt eine Anwendung für Klebebänder, für die kohäsive Klebemassen benötigt werden, aus.

Butadien Copolymere mit hohem Butadiengehalt, die ein hartes und damit kohäsives Segment enthalten, sind aber aufgrund der Polymerstruktur und des Preisniveaus als Gerüstpolymere für kohäsive Haftklebemassen von grundsätzlichem Interesse.

Aufgabe der Erfindung war es, weitere Butadiencopolymere für die beschriebene Anwendung bereit zu stellen, die den Mängel niedriger Kohäsion nicht aufweisen, und mit der ein Haftklebeband gemacht werden kann, das auch für reversible Anwendungen in Betracht kommt.

Gelöst wurde die Aufgabe durch Verwendung einer wässrigen Butadien/Acrylat-Copolymer-Dispersion mit einem Butadiengehalt größer 55 %, die mit Naturkautschuklatex compoundiert wurde. Damit werden negative Einflüsse auf die Kohäsion der Klebemassen durch Klebharze vermieden. Auch Rückstände aufgrund von Klebharzen werden damit beim Wiederablösen vermieden.

Bei der Gruppe der Butadien/Acrylat Copolymeren handelt es sich um Gerüstpolymere aus Butadien und einem mäßig harten Comonomer wie z.B. Butylacrylat. Butadien/Acrylat Copolymere weisen deutlich niedrigere Glasübergangspunkte auf als Butadien/Styrol- oder Butadien/Methylmethacrylat Copolymere. Bei einem Butadiengehalt von etwa 75% kann der Glasübergangspunkt um etwa 15°C auf -70°C abgesenkt werden, wenn man von dem Comonomeren Styrol auf z.B. Butylacrylat übergeht.

Sodann sind auch Gemische unterschiedlicher Butadien/Acrylat- und Naturkautschuklatex-Typen einsetzbar.

Zu dem so erhaltenen Compound können ggf. weitere Coagenzien wie z. B. Alterungsschutzmittel, UV-Schutzmittel Füllstoffe oder Emulgatoren zugemischt werden, um den Alterungsschutz und die klebtechnische Daten weiter der Anwendung anzupassen.

Nach Beschichtung der Klebemasse auf einem Polymer- oder Papierträger ist ein Haftklebeband erhältlich, das die Anforderungen eines Klebebandes mit kohäsiven Eigenschaften erfüllt, und für z. B. reversible Anwendungen geeignet ist. Derartige Produkte können im Bereich des Oberflächenschutzes angewendet werden.

### Klebemassen:

Die Copolymerisation von Butadien mit Acrylaten wie z.B. Butylacrylat in wässrigem Medium liefert Copolymere, die filmbildend sind, und die einen für druckempfindliches Kleben geeigneten Tg aufweisen. Butadien/Acrylat Dispersionen werden allgemein durch den Einbau geringer Mengen carboxylhaltiger Gruppen stabilisiert, was gleichzeitig die Haftung auf vielen Untergründen verbessert.

Als Klebemassen für die Erfindung können insbesondere carboxylierte Butadien/Acrylat-Copolymer-Dispersionen eingesetzt werden mit einem Butadienanteil von 55-95%, vorzugsweise 60-85%, bezogen auf den Gesamtfeststoffanteil an Acrylat und Butadien, die im Gemisch mit Naturkautschuklatex eine hevorragende Eignung als Klebemassen für reversible Klebebänder zeigen. Carboxylierte derartige Copolymere enthalten insbesondere unter 10%, bevorzugt unter 5% bezogen auf den Monomergehalt an carboxylhaltigen Comonomer, insbesondere Acrylsäure, im Copolymer.

Erfindungsgemäße Butadien/Acrylat-Dispersionstypen mit einen einem Butadiengehalt >60% sind z.B. von Dow erhältlich.

Als Naturkautschuklatexkomponente kommen sowohl Latices vom Low-Ammonia Typ, als auch solche vom High-Ammonia Typ in Betracht. Bevorzugen sind Latices vom Low-Ammonia Typ.

Bezogen auf den Gesamtfeststoffgehalt an Butadien/Acrylat-Copolymer und Naturkautschuklatex sollte der Naturkautschukanteil im Bereich 5-80%, vorzugsweise 20-50% liegen. Zur gezielten Einstellung der klebtechnischen Eigenschaften können auch Mischungen aus unterschiedlichen Naturkautschuklatices eingesetzt werden. Zur Verbesserung des Alterungsverhaltens können Dispersionen üblicher Alterungsschutz- und UV-Schutzmittel zugesetzt werden, die aus dem Bereich der Elastomeren hinreichend bekannt sind.

Weiterhin können bei Bedarf weiterer Additive zur Anpassung der Produkteigenschaften zugesetzt werden, wie z.B. Füllstoffe oder Emulgatoren z.B. vom Typ alkoxylierter Alkylphenole. Mit diesen Additiven gelingt es, die klebtechnischen Eigenschaften weiter in gewünschter Weise zu beeinflussen.
Die Einstellung der Adhäsion/Kohäsion Balance kann bei Bedarf durch chemische Vernetzung über die vorhandenen Carboxylgruppen durch zugesetzte Vernetzungsagenzien wie z.B. Aluminium- oder Titanchelat, weitere Metallkomplexe, Isocyanate, Epoxid erfolgen. Eine strahlenchemische Vernetzung ist im Gegensatz zu vielen Styrol-Blockcopolymeren aufgrund des ausreichend hohen Molekulargewichtes ebenfalls möglich.

Der Klebemasseauftrag beträgt 10-120g/m², bevorzugt 15-40g/m².

### Trägermaterialien:

Als Trägermaterialien für die Erfindung kommen alle üblichen Trägermaterialien in Betracht. Hierbei handelt es sich im wesentlichen um Folien und Papiere, die aufgrund ihrer Eigenschaften und des Herstellungs- bzw. Nachbehandlungsprozeßes die geforderten mechanischen Eigenschaften der Anwendung aufweisen.

Im Falle der Folien handelt es sich im wesentlichen um Polyethylen, Polypropylen, Polyvinylchlorid Polyester und andere für die Anwendung üblichen Polymere und Copolymere, die sowohl einschichtig als auch mehrschichtig eingesetzt werden können. Bei mehrschichtigen Systemen kann auch die Zusammensetzung und die Dicke der einzelnen Schichten variieren.

Es können sowohl Blas-, als auch Flachfolie eingesetzt werden.

Die Dicken der Folien liegen zwischen 10 und 250 µm, bevorzugt zwischen 20 und 120 µm.

Um eine ausreichende Haftung der Klebemasse auf dem Trägermaterial sicherzustellen muß die Oberflächenenergie der zu beschichtenden Seite innerhalb eines definierten Bereiches liegen. Dieses kann entweder über eine zusätzliche Beschichtung mit einem Primer gewährleistet werden, oder über eine Oberflächenbehandlung. Bevorzugt wird eine Corona- oder Flammenvorbehandlung, mit der die gewünschten Oberflächenenergien erreicht werden können. Die Oberflächenenergien sollten in einem Bereich von 25-50mN/m, bevorzugt 30-45 mN/m liegen.

Als Trägermaterialien kommen desweiteren imprägnierte und hochgeleimte definiert gekreppte Papiere mit Reißfestigkeiten in Betracht, die den gewünschten Anforderungen genügen. In Abhängigkeit der gewünschten Anwendung können sowohl Papiere mit höherer Längs-Dehnbarkeit als Quer-Dehnbarkeit eingesetzt werden, als auch Papiere mit höherer Quer-Dehnbarkeit als Längs-Dehnbarkeit, sowohl in gebleichter, als auch in der umweltfreundlichen ungebleichten Version.

Alle Prozentangaben beziehen sich auf Gewichts-%.

### Beispiele:

### Beispiel 1:

Eine Dispersionsklebemasse bestehend aus 50% einer carboxylierten Butadien/Acrylat Dispersion mit einem Butadiengehalt von etwa 70% (XZ 92027.00, Butadien/Acrylat Dispersion der Firma Dow) und 50% Naturkautschuklatex (Zentrifugenlatex Low-Ammonia) wird mit einem Drahtrakel kontinuierlich mit einer Schichtdicke von 25 g/m² auf einer Polyester-Folie beschichtet. Die Prozentangaben sind auf den Feststoff-Gehalt bezogen.

### Technische Bedingungen:

- Maschine:: Technikumsbeschichtungsanlage
- Auftragswerk:: Drahtrakel
- Trägerbahngeschwindigkeit:: 3,5 m/min

Das beschichtete Material wird anschließend thermisch getrocknet:
- Trocknung (Schwebedüsentrockner):: Zone 1: 100 °C
Zone 2: 120 °C

Das Ballenmaterial wird anschließend zu Rollen geschnitten.

### Klebtechnische Daten (Frischzustand):

Klebkraft/Stahl: 0,2N/cm
Scherstandzeit/Stahl(1 3x20mm,1 kp): > 20.000min:
Microscherweg (40°C, 3N, ): 10µm
Thermoscherweg (5°C/min, 3N, in °C): > 200°C

## Patentansprüche

1. Klebeband mit einem Träger und einer kohäsiven Klebemasse, **dadurch gekennzeichnet, dass** die Klebemasse als wässrige Butadien/Acrylat-Copolymer-Dispersion mit einem Butadiengehalt größer 55 Gew.-% in Abmischung mit Naturkautschuklatex auf dem Träger beschichtet und anschließend getrocknet ist.

2. Klebeband nach Anspruch 1 **dadurch gekennzeichnet, dass** der Naturkautschuklatex sowohl vom Typ Low-Ammonia, als auch vom Typ High-Ammonia sein kann.

3. Klebeband nach Anspruch 1 **dadurch gekennzeichnet, dass** auch Gemische unterschiedlicher Butadien/Acrylat- und Naturkautschuklatex-Typen einsetzbar sind.

4. Klebeband nach Anspruch 1 **dadurch gekennzeichnet, dass** die Klebemasse durch zugesetzte übliche Vernetzer (z.B. Aluminium- oder Titanchelat, weitere Metallkomplexe, Isocyanate, Epoxid, etc.) chemisch vemetzbar ist.

5. Klebeband nach Anspruch 1 **dadurch gekennzeichnet, dass** die Klebemasse physikalisch vernetzbar ist, insbesondere durch z.B. ESH.

6. Klebeband nach Anspruch 1 **dadurch gekennzeichnet, dass** zur Verbesserung der Alterungsbeständigkeit Alterungsschutz- und UV-Schutzmittel eingesetzt werden können.

7. Klebeband nach Anspruch 1 **dadurch gekennzeichnet, dass** der Träger ein Polyolefin, Polyester, PVC oder ein Papier ist.

8. Klebeband nach Anspruch 1 **dadurch gekennzeichnet, dass** der Masseauftrag der Klebemasse 10-120 g/m² beträgt.

9. Klebeband nach Anspruch 1 **dadurch gekennzeichnet, dass** zur Verbesserung der Masseverankerung eine physikalische Oberflächenbehandlung des Trägers erfolgt oder der Träger mit einem Primer vorbehandelt ist.

10. Klebeband nach Anspruch 1, **dadurch gekennzeichnet, dass** die Butadien/Acrylat-Dispersion vom Typ einer carboxylierten Butadien/Acrylat-Dispersion ist.

11. Klebeband nach Anspruch 1, **dadurch gekennzeichnet, dass** der Anteil an Naturkautschuklatex im Bereich 5 - 80%, insbesondere 20 - 50% bezogen auf den Gesamtfeststoffgehalt liegt.

12. Verwendung von klebharzfreien Klebemassen zur Erhöhung der Kohäsion in Klebebändern nach einem der Ansprüche 1 - 11, wobei die Klebemasse als wässrige Butadien/Acrylat-Copolymer-Dispersion mit einem Butadiengehalt größer 55 Gew.-% in Abmischung mit Naturkautschuklatex auf dem Träger beschichtet und anschließend getrocknet ist.

## Claims

1. Adhesive tape having a backing and a cohesive adhesive composition, **characterized in that** the adhesive composition is an aqueous butadiene-acrylate copolymer dispersion having a butadiene content of more than 55% in a blend with natural rubber latex and has been coated onto the backing and then dried.

2. Adhesive tape according to Claim 1, **characterized in that** the natural rubber latex may be either of the low ammonia or of the high ammonia type.

3. Adhesive tape according to Claim 1, **characterized in that** mixtures of different butadiene-acrylate types and natural rubber latex types may also be used.

4. Adhesive tape according to Claim 1, **characterized in that** the adhesive composition is chemically crosslinkable by means of added customary crosslinkers (e.g., aluminium chelate or titanium chelate, further metal complexes, isocyanates, epoxy, etc.).

5. Adhesive tape according to Claim 1, **characterized in that** the adhesive composition is physically crosslinkable, in particular by means, for example, of EBC.

6. Adhesive tape according to Claim 1, **characterized in that** the ageing stability may be improved by using ageing inhibitors and UV stabilizers.

7. Adhesive tape according to Claim 1, **characterized in that** the backing is a polyolefin, polyester, PVC or paper.

8. Adhesive tape according to Claim 1, **characterized in that** the application rate of the adhesive composition is 10-120 g/m².

9. Adhesive tape according to Claim 1, **characterized in that** to improve the anchoring of the composition the backing is physically surface treated or is pretreated with a primer.

10. Adhesive tape according to Claim 1, **characterized in that** the butadiene-acrylate dispersion is of the type of a carboxylated butadiene-acrylate dispersion.

11. Adhesive tape according to Claim 1, **characterized in that** the fraction of natural rubber latex is in the range 5-80%, in particular 20-50%, based on the total solids content.

12. Use of adhesive compositions free from tackifier resin to increase the cohesion in an adhesive tape according to any of Claims 1-11, where the adhesive composition is an aqueous butadiene-acrylate copolymer dispersion having a butadiene content of more than 55% in a blend with natural rubber latex and has been coated onto the backing and then dried.

## Revendications

1. Ruban adhésif comportant un support et une masse adhésive cohésive, **caractérisé en ce que** la masse adhésive est appliquée sur le support en tant que dispersion aqueuse de copolymère de butadiène /acrylate d'une teneur en butadiène de plus de 55% en poids en mélange avec un latex de caoutchouc naturel, et est ensuite séchée.

2. Ruban adhésif selon la revendication 1, **caractérisé en ce que** le latex de caoutchouc naturel peut être tant du type LA (Low Ammonia) que du type HA (High Ammonia).

3. Ruban adhésif selon la revendication 1, **caractérisé en ce que** l'on peut aussi mettre en oeuvre des mélanges de différents types de latex de butadiène/acrylate et de caoutchouc naturel.

4. Ruban adhésif selon la revendication 1, **caractérisé en ce que** la masse adhésive peut être chimiquement réticulée par l'ajout de réticulants usuels (par exemple des chélates d'aluminium ou de titane, d'autres complexes métalliques, des isocyanates, de l'époxyde etc.)

5. Ruban adhésif selon la revendication 1, **caractérisé en ce que** la masse adhésive peut être réticulée de manière physique, en particulier par exemple par ESH.

6. Ruban adhésif selon la revendication 1, **caractérisé en ce que**, pour améliorer la résistance au vieillissement, on peut mettre en oeuvre des agents de protection contre le vieillissement et de protection contre les UV.

7. Ruban adhésif selon la revendication 1, **caractérisé en ce que** le support est une polyoléfine, un polyester, du PVC ou un papier.

8. Ruban adhésif selon la revendication 1, **caractérisé en ce que** l'application massique de la masse adhésive est de 10 à 120 g/m².

9. Ruban adhésif selon la revendication 1, **caractérisé en ce que**, pour améliorer l'ancrage de la masse, on effectue un traitement de surface du support ou le support est prétraité au moyen d'un apprêt.

10. Ruban adhésif selon la revendication 1, **caractérisé en ce que** la dispersion de butadiène/acrylate est du type dispersion de butadiène/acrylate carboxylée.

11. Ruban adhésif selon la revendication 1, **caractérisé en ce que** la fraction de latex de caoutchouc naturel est de l'ordre de 5 à 80%, en particulier de 20 à 50%, par rapport à la teneur totale en solides.

12. Utilisation de masses adhésives exemptes de résines adhésives pour augmenter la cohésion dans des rubans adhésifs selon l'une quelconque des revendications 1 à 11, où la masse adhésive est appliquée sur le support en tant que dispersion aqueuse de copolymère de butadiène/acrylate d'une teneur en butadiène de plus de 55% en poids en mélange avec un latex de caoutchouc naturel, et est ensuite séchée.
